# EUROPEAN PATENT APPLICATION

(11) **EP 4 703 034 A1**
(43) Date of publication of application: **04.03.2026**
(21) Application number: 24197507.7
(22) Date of filing: 30.08.2024
(51) Int. Cl.: B01J 20/10, B01D 53/26, B01J 20/12, B01J 20/22, B01J 20/26

(54) **DESICCANT COMPOSITION**

(71) Applicant: CLARIANT INTERNATIONAL LTD, 4132 Muttenz (CH)
(72) Inventor: SCHARFE, Sandra, 85368 Moosburg (DE)
(74) Representative: Zusammenschluss Clariant

(57) **Abstract**

The application relates to a desiccant composition and its use to produce a moisture absorbing product as well as the use of the moisture absorbing product to absorb moisture at high humidity environment conditions.

## Description

The application relates to a desiccant composition and its use to produce a moisture absorbing product as well as the use of the moisture absorbing product to absorb moisture at high humidity environment conditions.

Products containing absorbent and desiccant materials have been available for many years and are frequently used to absorb moisture and prevent moisture from adversely affecting products shipped in shipping containers.

During shipment these products are subject to high humidity for a long time during transport of goods. It is well known that liquid water present in the shipping containers can cause rusting and bio fouling, both in the inner wall of the container and the shipped products. Such products are described in EP0793992A2.

The products known from the state of the art usually consist of an outer lining material (mostly in form of a bag) which is moisture permeable and a powder desiccant material within the bag. During the absorption of the moisture by the powder desiccant material the package will start swelling due to moisture uptake and needs to be disposed as soon as the maximum absorption capacity is reached.

In recent times new fields of application emerged e.g. within head lamps or other small spaces of electric vehicles or other electrical appliances which are exposed to high humidity especially over a huge temperature range and at rapid temperature changes. Such conditions apply in particular in electric appliances and vehicles which are designed for outdoor use for example headlamps of electric cars and other LED appliances. The heat generated by electric engines and/or LED lamps is much lower than the heat generated by conventional petrol or diesel engines or conventional light bulbs and moisture will not evaporate. Products described within the EP0793992A2 are not suitable for such small space applications as the desiccant materials used are significantly swelling with increasing moisture content. Further, the desiccant composition will start liquifying at high humidity conditions during low and high temperatures. Liquified desiccant is not only prone to leakage but also shows a significantly decreased absorption capacity due to disintegration of the material.

The inventors of the present invention have therefore set themselves the task to develop a novel desiccant composition which does not show the disadvantages of the state of the art and provide a stable absorption system to be used in small spaces under quickly changing temperatures at high humidity.

It has surprisingly been found that this task is solved by a specific desiccant composition comprising
(a) from 20 to 65 wt.-% of at least one polymer wherein the polymer is characterized in that its repeating structural units comprise
   i) from 5.00 mol-% to 99.9 mol-% of repeating units according to Formula (1); 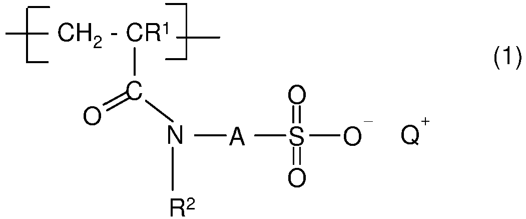 wherein:
      R¹ and R² are independently selected from H, methyl or ethyl;
      A is a linear or branched C₁-C₁₂-alkyl group; and
      Q⁺ is H⁺, NH₄⁺, organic ammonium ions [NHR⁵R⁶R⁷]⁺ wherein R⁵, R⁶, and R⁷ independently of one another may be hydrogen, a linear or branched alkyl group having 1 to 22 carbon atoms, a linear or branched, singularly or multiply unsaturated alkenyl group having 2 to 22 carbon atoms, a C₆-C₂₂ alkylamidopropyl group, a linear mono-hydroxyalkyl group having 2 to carbon atoms or a linear or branched dihydroxyalkyl group having 3 to carbon atoms, and where at least one of the radicals R⁵, R⁶, and R⁷ is not hydrogen, or Q⁺ is Li⁺, Na⁺, K⁺, ½ Ca⁺⁺, ½ Mg⁺⁺, ½ Zn⁺⁺, 1/3 Al⁺⁺⁺, or combinations thereof;
   (ii) from 0.1 mol-% to 95 mol-% of crosslinking or branching units, wherein the crosslinking or branching units result from the incorporation of a monomer comprising at least two olefinically unsaturated double bonds; and
(b) From 35 to 80 wt.-% of at least one deliquescent component, at least one desiccant clay, at least one silica gel, at least one molecular sieve at least one calcium sulfate or mixtures thereof.

The newly developed desiccant composition can absorb moisture at a very rapid speed, however, is also able to release moisture once the environment conditions change, i.e. it can be longer in use than state of the art products. As the newly developed composition further shows significantly less swelling than the known state of the art products it is particularly suitable for use in very small spaces.

Within the present invention the term "monomer" refers to a discrete, non-polymerised chemical moiety capable of undergoing polymerisation in the presence of an initiator or any suitable reaction that creates a macromolecule e.g. such as radical polymerisation, polycondensation, polyaddition, anionic or cationic polymerization, ring opening polymerisation or coordination insertion polymerisation. "Unit" means a monomer that has already been polymerised i.e. is part of a polymer.

Within the present invention the term "polymer" refers to a chemical formed from the polymerisation of two or more monomers. The term "polymer" shall include all materials made by the polymerisation of monomers as well as natural polymers. Polymers made from only one type of monomer are called homopolymers. Herein, a polymer comprises at least two monomers. Polymers made from two or more different types of monomers are called copolymers. The distribution of the different monomers can be random, alternating or block-wise (i.e. block copolymer). The term "polymer" used herein includes any type of polymer including homopolymers and copolymers.

In at least one embodiment, the polymer has a weight average molecular weight of at least 700 g/mol, preferably from 700 g/mol to 10 million g/mol.

In at least one embodiment, the polymer comprises at least one repeating unit (i) according to Formula (1) wherein R¹ and R² are independently selected from H, methyl or ethyl; A is a linear or branched C₁-C₁₂-alkyl group; and Q⁺ is H⁺, NH₄⁺, Li⁺, Na⁺, K⁺, ½ Ca⁺⁺, ½ Mg⁺⁺, ½ Zn⁺⁺, 1/3 Al⁺⁺⁺, or combinations thereof, preferably wherein Q⁺ is Na⁺or NH₄⁺. NH₄⁺ is preferred because it is more soluble the favored solvent used in the polymer synthesis. Na⁺ is preferred because of reduced likelihood of unpreferred gases being produced during synthesis and also due to economic advantages.

In at least one embodiment, Q⁺ is NH₄⁺. In at least one embodiment, Q⁺ is selected from the group monoalkylammonium, dialkylammonium, trialkylammonium and/or tetraalkylammonium salts, in which the alkyl substituents of the amines may independently of one another be (C₁ to C₂₂)-alkyl radicals or (C₂ to C₁₀)-hydroxyalkyl radicals.

In at least one embodiment, the polymer comprises at least one repeating unit (i) according to Formula (1). In at least one embodiment, the polymer comprises two or more different repeating units (i) according to Formula (1), such as repeating units according to Formula (1) having different Q⁺ counterions.

In at least one embodiment, the repeating units (i) according to Formula (1) have a degree of neutralisation of between 0 mol-% and 100 mol-%. In at least one embodiment, the repeating units (i) according to Formula (1) have a degree of neutralisation of from 50.0 to 100 mol-%, preferably from 80 mol-% to 100 mol-%, more preferably from 90.0 to 100 mol-%, even more preferably from 95.0 to 100 mol-%. Particular preference being given to a degree of neutralisation of more than 80 mol-%, more preferably more than 90 mol-%, even more preferably more than 95 mol-%. The degree of neutralisation is important in view of the molecular weight of the polymer and the yield of polymer produced.

In at least one embodiment, the repeating units (i) according to Formula (1) result from the incorporation of a monomer selected from the group consisting of acryloyldimethyltaurates, acryloyl-1,1-dimethyl-2-methyltaurates, acryloyltaurates, acryloyl-N-methyltaurates, and combinations thereof. Preferably the repeating units (i) according to Formula (1) result from the incorporation of acryloyldimethyltaurate.

The polymer comprises crosslinking or branching units (ii), wherein the crosslinking or branching units result from the incorporation of a monomer comprising at least two olefinically unsaturated double bonds. The polymer comprises from 0.01 mol-% to 10 mol-%, preferably 0.01 mol-% to 5 mol-%, more preferably from 0.01 mol-% to 3 mol-% of crosslinking or branching units.

In at least one embodiment, the crosslinking or branching units (ii) comprise least one oxygen, nitrogen, and sulfur or phosphorus atom. In at least one embodiment, the crosslinking or branching units result from the incorporation of monomers having a molecular weight of less than 500 g/mol. In at least one embodiment, the crosslinking or branching units (ii) are bifunctional or trifunctional crosslinking agents.

In at least one embodiment, the polymer comprises two or more different crosslinking or branching units (ii).

In at least one embodiment, the crosslinking or branching units result from the incorporation of a monomer according to Formula (2): 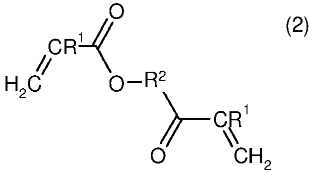 wherein
- R¹: is independently selected from H, methyl or ethyl; and
- R²: is a linear or branched alkyl group having 1 to 6 carbon atoms, or is a linear or branched, mono- or polyunsaturated alkylene group having 2 to 6 carbon atoms, - (CH₂-CH₂-O)ₙ-;
- n: is a real number between 1 and 100.

A monomer according to Formula (2) has the advantage that the polymer can be predicted as more brush-like in structure. However, brush-like polymers show different properties versus linear ones. For example, depending on the different comonomer units the solubility could in- or decreased.

In at least one embodiment, the crosslinking or branching units (ii) result from the incorporation of a monomer according to Formula (4) 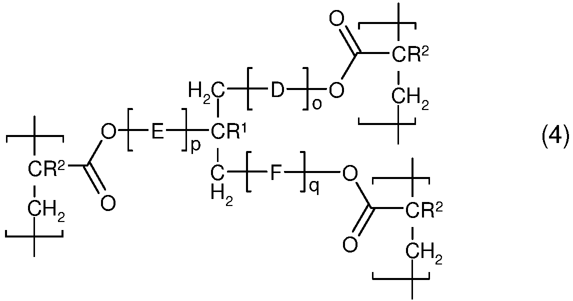 wherein
R¹ is independently selected from H, methyl or ethyl; and
R² is a linear or branched alkyl group having 1 to 6 carbon atoms, or is a linear or branched, mono- or polyunsaturated alkylene group having 2 to 6 carbon atoms;
D, E, and F are independently methyleneoxy(-CHzO), ethyleneoxy(-CH₂-CH₂-O-), propyleneoxy(-CH(CH₃)-CH₂-O-), a linear or branched alkylene group having 1 to 6 carbon atoms, a linear or branched, singularly or multiply unsaturated alkenylene group having 2 to 6 carbon atoms, a linear mono-hydroxyalkylene group having 2 to 6 carbon atoms or a linear or branched dihydroxyalkylene group having 3 to 6 carbon atoms; and
o, p, and q each independently are an integer from 1 to 50.

A monomer according to Formula (4) has the advantage that a polymer can be predicted as being highly branched.

In at least one embodiment, the crosslinking or branching units (ii) result from the incorporation of a monomer selected from the group consisting of methylenebisacrylamide; methylenebismethacrylamide; esters of unsaturated monocarboxylic and polycarboxylic acids with polyols, preferably di-acrylates and tri-acrylates and -methacrylates (e.g. glycerol propoxylate triacrylate [GPTA]), more preferably butanediol and ethylene glycol diacrylate and poly ethylene glycol diacrylate and -methacrylate, trimethylolpropane triacrylate (TMPTA) and trimethylolpropane trimethacrylate (TMPTMA); allyl compounds, preferably allyl (meth)acrylate, triallyl cyanurate, diallyl maleate, polyallyl esters, tetraallyloxyethane, triallylamine, tetraallylethylenediamine; allyl esters of phosphoric acid; and/or vinylphosphonic acid derivatives. The choice of crosslinking or branching units is important in view of the flexibility of the crosslinks between the main chains of the polymer which affects the final performance of the polymer.

In at least one embodiment, the crosslinking or branching units (ii) result from the incorporation of a crosslinker selected from the group consisting of trimethylolpropane triacrylate (TMPTA) and/ or glycerol propoxylate triacrylate (GPTA). Particularly preferred as crosslinkers for the polymers of the invention are glycerol propoxylate triacrylate (GPTA), trimethylolpropane triacrylate (TMPTA), pentaerythritol diacrylate mono stearate (PEAS), hexanediol diacrylate (HDDA), poly ethylene glycol diacrylate (PEG-DA) and hexanediol dimethacrylate (HDDMA). Especially preferred is glycerol propoxylate triacrylate (GPTA) and trimethylolpropane triacrylate (TMPTA).

Within a particularly suitable embodiment, the polymer further comprises (iii) from 0.99 mol-% to 59.99 mol-%, preferably from 1.99 mol-% to 44.99 mol-% of repeating neutral structural units. Within a preferred embodiment, the repeating neutral structural unit is selected from the group consisting of N-vinylformamide, N-vinylacetamide, N-methyl-N-vinylformamide, N-methyl-N-vinylacetamide, N-vinyl-2-pyrrolidone, N-vinylcaprolactam, vinylacetate, N,N-dimethylacrylamide, N-isopropylacrylamide, acrylamide, methylacrylate, behenylpolyethoxy-(25)-methacrylate, laurylpoly-ethoxy-(7)-methacrylate, cetylpolyethoxy-(10)-methacrylate, stearylpoly-ethoxy-(8)-methacrylate, methoxypoly-ethoxy-(12)-methacrylate, and combinations thereof.

Within a further particularly suitable embodiment the at least one cross-linked polymer further comprises
(iv) from 1.98 mol-% to 20 mol-% of anionic structural units, wherein the repeating anionic structural units result from the incorporation of a monomer comprising at least one carboxylate anion, and wherein the repeating anionic structural units are different from (i).

In a particularly suitable embodiment, the repeating anionic structural unit (iv) results from the incorporation of monomers according to formula (3) 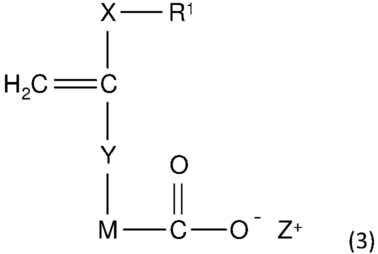 wherein
- R1 and R3: are H, methyl or ethyl, or C(O)O-Z+;
- X, Y: are selected from a covalent bond, O, CH2, C(O)O, OC(O), C(O)NR3 or NR3C(O);
- M: is selected from a covalent bond, -[C(O)O-CH2-CH2]n-, a linear or branched alkylene group with 1 to 6 carbon atoms, a linear or branched, mono- or polyunsaturated alkenylene group with 2 to 6 carbon atoms, a linear mono-hydroxyalkylene group with 2 to 6 carbon atoms or a linear or branched di-hydroxyalkylene group with 3 to 6 carbon atoms;
- n: is an integer from 1 to 5; and
- Z+: is H+, NH4+, an organic ammonium ion [HNR5R6R7]+
wherein R5, R6 and R7 are independently hydrogen, a linear or branched alkyl group with 1 to 22 carbon atoms, a linear or branched, mono- or polyunsaturated alkenyl group with 2 to 22 carbon atoms, a C6 to C22 alkylamidopropyl group, a linear mono-hydroxyalkyl group with 2 to 10 carbon atoms or a linear or branched di-hydroxyalkyl group with 3 to 10 carbon atoms, and wherein at least one of R5, R6 and R7 is not hydrogen, or Z+ is Li+, Na+, K+, ½ Ca++, ½ Mg++, ½ Zn++, 1/3 AI+++, or combinations thereof. In at least one embodiment, the Z+ is H+, NH4+, Li+, Na+, K+, ½ Ca++, ½ Mg++, ½ Zn++, or 1/3 Al+++, preferably H+, NH4+, Li+, Na+ or K+.

In at least one embodiment, the polymer comprises at least one repeating anionic structural unit (iv) selected from the group consisting of acrylic acid or acrylate methacrylic acid or methacrylate, itaconic acid or itaconate, carboxyethylacrylic acid or carboxyethylacrylate, carboxyethylacrylic acid oligomers or carboxyethylacrylate oligomers, 2-propylacrylic acid or 2-propylacrylate, 2 ethylacrylic acid or 2 ethylacrylate, and their respective alkali or alkaline earth metal salts.

Within another preferred embodiment the desiccant composition according to the present invention further comprises from 1 to 25 wt.-%, preferably from 2.5 to 20 wt.-% and particularly preferred from 5 to 15 wt.-% of at least one filler selected from the group consisting of calcium carbonate, cellulose or cellulose derivatives, anhydrous calcium sulphate, calcium oxide, silica gel, bentonite clays, zeolites, and mixtures thereof.

Within the present invention the term "deliquescent" refers to any compound which is capable of absorbing water from the air to dissolve itself and form an aqueous solution. Deliquescent compounds are a class of hygroscopic substances. Other types of hygroscopic compounds may absorb water, yet not dissolve. In order to be deliquescent, a compound must both absorb a large amount of water and be sufficiently soluble to dissolve in it.

Within a preferred embodiment the at least one deliquescent component is selected from the group consisting of CaClz, MgCl₂, (NH₄)₂SO₄, NH₄Cl, Ca(NO₃)₂*2H₂O, Mg(NO₃)₂*6 H₂O, K₂HPO₄, NH₄H₂PO₄, KHSO₄, Na₂CO₃*10H₂O, ZnSO₄*7H₂O, Na(C₃H₃O₂)*3H₂O, Na₂S₂O₃, KBr, Na₂SO₃*7H₂O, KI, Nal, NaNO₂, NaF, NaHSO₄ and mixtures thereof wherein CaClz and MgCl₂ are particularly preferred.

Within a second aspect the present invention relates to the use of the desiccant composition as defined above for the manufacture of a moisture absorbing product. Within a particularly suitable embodiment, the moisture absorbing product is contained in a flexible bag. Using a flexible bag has the advantage that the moisture absorbing product can be tailor made for any application or space. Such a flexible bag may be rectangular but can be shape in any other form suitable for the respective purpose.

Within a particularly suitable embodiment, the material of the bag consists of a multi-layered packaging material comprising a microporous, gas permeable film, a gas permeable support film and a binder to bind the microporous film to the gas permeable film.

When a multi-layered packaging material is used, the microporous film is preferably an open-celled microporous film. Microporous films are generally classified in two types: closed celled films, wherein the pores of the film are not interconnected, and open-celled film, wherein the pores are essentially interconnected through tortuous paths which may extend from one exterior surface or surface region to the opposite surface region. The open-celled microporous film of this invention may be formed by a number of different processes, including, for example, cold stretching, i.e. cold drawing the elastic film until porous surface regions or areas, which are elongated normally, and hot stretching, i.e. hot drawing, wherein the film is stretched after forming at a higher temperature to form the microporous product, and then heating or heat setting the porous film under tension or a combination thereof. In addition, other processes can be used, for example, forming the film and then subjecting it to processes which result in microporosity, such as by subjecting it to a laser beam or chemical action.

In a particularly suitable embodiment, the microporous film is a microporous polypropylene sheet containing a calcium carbonate filler. In a well-known process for forming this film, a polypropylene powder is mixed with the calcium carbonate filler along with certain additives, such as plasticizers and antioxidants. The polypropylene powder preferably comprises about 30-50% of the mixture by weight with the calcium carbonate comprising preferably about 70-50%, and the additives, preferably about 1-5%. The polypropylene powder mixture is then extruded using conventional extruding procedures at a temperature of about 200°C - 300°C to form pellets which are then subjected to a film extrusion procedure at a temperature of about 200°C - 300°C to form a base sheet. This sheet is then stretched in both a longitudinal direction and a transverse direction to form the microporous polypropylene sheet. The calcium carbonate filler within the polypropylene sheet assists in the formation of these micropores by partially filling the pores during the formation process. A substantial portion of the calcium carbonate remains in the film after stretching, comprising as much as about 70% of the film by weight. The thickness of the film is from about 0.01 to 0.20 mm and preferably from 0.02 to 0.15 mm. The micropores are preferably about 1 micron in size.

The gas permeable film which forms the second layer of such a multi-layered packaging material can be prepared from any conventional olefinic plastic film, paper sheet or nonwoven cloth which is gas permeable. It is critical that this film be both gas permeable and water impermeable and have sufficient strength to support the microporous film layer. Preferably, this gas permeable film is produced from non-woven polyester and/or polypropylene fibers formed into a non-woven cloth. This gas permeable film is preferably a dry-type, wet-type or spun-bond or a non-woven cloth.

In order to provide additional strength for the packaging material, these two films are bound together, for example by an adhesive. Any conventional adhesive is acceptable which does not interfere with the gas permeability of the composite film. Thus, it is critical that the adhesive layer between these two layers not be applied too thickly or cover too much of the surface of either of the two films so as to prevent the passage of water vapor through both layers. Accordingly, preferably the adhesive material is placed between the layers in a disconnected or discontinuous pattern wherein the areas of adhesive material are separated by non-coated areas, for example, in a grid-like structure or a regular dot structure. For example, a mesh-like structure may be utilized, wherein the open space between the mesh is at least from about 0.05 microns to about 3 microns. Alternatively, individual dots of adhesive can be placed between the layers, wherein the dots are about 1 micron in diameter and separated from each other by about 1 to 5 microns. Preferably at least about 40 percent of each film remains uncovered by the adhesive. In a preferred embodiment the adhesive material is a polyurethane prepolymer solution.

The overall thickness of the preferred multi-layered packaging material is about 0.1 to about 1.0 mm.

Within a third aspect the present invention relates to a use of the desiccant composition or the moisture absorbing product as defined above to absorb moisture at conditions of from 50 to 90% relative humidity (r.h.). The moisture absorbing product according to the present invention is thereby particularly suitable for conditions of from 40 to 90 °C and from 40 to70% r.h. or from 50 to 85 °C and from 45 to 65 % r.h.. The moisture absorbing products according to the present invention will reliably absorb moisture while swelling is kept at a minimum while liquefication is prohibited. However, the moisture absorbing product is also able to release moisture once the environment conditions change and can therefore be used for a longer time than products known from the state of the art. Further, the moisture absorbing products according to the present invention are also suitable to absorb moisture at low temperatures and high humidity, such as conditions of from 5 to 15 °C and from 40 to 90% r.h..

Generally preferred embodiments of the desiccant composition according to the present invention are defined in the following:

### Generally preferred embodiment A

Desiccant composition comprising
(a) From 25 to 40 wt.-% of at least one polymer wherein the polymer is
   characterized in that its repeating structural units comprise
   (i) from 5.00 mol-% to 99.9 mol-% of repeating units according to Formula (1): 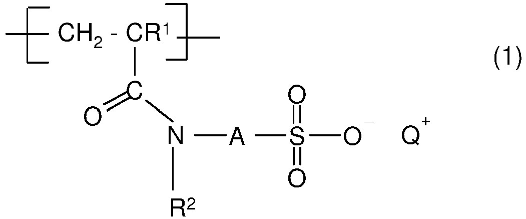 wherein:
      R¹ and R² are independently selected from H, methyl or ethyl;
      A is a linear or branched C₁-C₁₂-alkyl group; and
      Q⁺ is H⁺, NH₄⁺, organic ammonium ions [NHR⁵R⁶R⁷]⁺ wherein R⁵, R⁶, and R⁷ independently of one another may be hydrogen, a linear or branched alkyl group having 1 to 22 carbon atoms, a linear or branched, singularly or multiply unsaturated alkenyl group having 2 to 22 carbon atoms, a C₆-C₂₂ alkylamidopropyl group, a linear mono-hydroxyalkyl group having 2 to carbon atoms or a linear or branched dihydroxyalkyl group having 3 to carbon atoms, and where at least one of the radicals R⁵, R⁶, and R⁷ is not hydrogen, or Q⁺ is Li⁺, Na⁺, K⁺, ½ Ca⁺⁺, ½ Mg⁺⁺, ½ Zn⁺⁺, 1/3 Al⁺⁺⁺, or combinations thereof;
   (ii) from 0.1 mol-% to 95 mol-% of crosslinking or branching units, wherein the crosslinking or branching units result from the incorporation of a monomer comprising at least two olefinically unsaturated double bonds; and
(b) From 60 to 75 wt.-% of at least one deliquescent component selected from the group consisting of CaClz, MgCl₂, (NH₄)₂SO₄, NH₄Cl, Ca(NO₃)₂*2H₂O, Mg(NO₃)₂*6H₂O, K₂HPO₄, NH₄H₂PO₄, KHSO₄, Na₂CO₃*10H₂O, ZnSO₄*7H₂O, Na(C₃H₃O₂)*3H₂O, Na₂S₂O₃, KBr, Na₂SO₃*7H₂O, KI, Nal, NaNO₂, NaF, NaHSO₄ and mixtures thereof;
   wherein the crosslinking or branching units result from the incorporation of a monomer according to Formula (2): 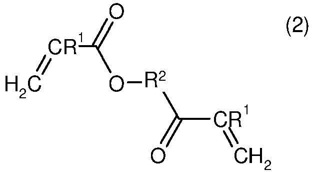
   wherein
      R¹ is independently selected from H, methyl or ethyl; and
      R² is a linear or branched alkyl group having 1 to 6 carbon atoms, or is a linear or branched, mono- or polyunsaturated alkylene group having 2 to 6 carbon atoms, -(CH₂-CH₂-O)ₙ-;
      n is a real number between 1 and 100.

### Generally preferred embodiment B

Desiccant composition comprising
(a) From 25 to 40 wt.-% of at least one polymer wherein the polymer is
   characterized in that its repeating structural units comprise
   (i) from 5.00 mol-% to 99.9 mol-% of repeating units according to Formula (1): 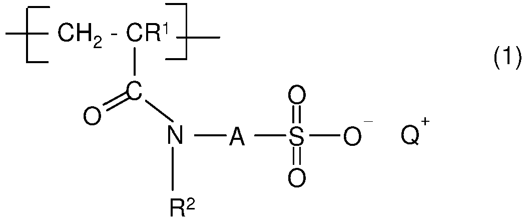 wherein:
      R¹ and R² are independently selected from H, methyl or ethyl;
      A is a linear or branched C₁-C₁₂-alkyl group; and
      Q⁺ is H⁺, NH₄⁺, organic ammonium ions [NHR⁵R⁶R⁷]⁺ wherein R⁵, R⁶, and R⁷ independently of one another may be hydrogen, a linear or branched alkyl group having 1 to 22 carbon atoms, a linear or branched, singularly or multiply unsaturated alkenyl group having 2 to 22 carbon atoms, a C₆-C₂₂ alkylamidopropyl group, a linear mono-hydroxyalkyl group having 2 to carbon atoms or a linear or branched dihydroxyalkyl group having 3 to carbon atoms, and where at least one of the radicals R⁵, R⁶, and R⁷ is not hydrogen, or Q⁺ is Li⁺, Na⁺, K⁺, ½ Ca⁺⁺, ½ Mg⁺⁺, ½ Zn⁺⁺, 1/3 Al⁺⁺⁺, or combinations thereof;
   (ii) from 0.1 mol-% to 95 mol-% of crosslinking or branching units, wherein the crosslinking or branching units result from the incorporation of a monomer comprising at least two olefinically unsaturated double bonds; and
(b) From 60 to 75 wt.-% of at least one deliquescent component selected from the group consisting of CaCl₂, MgCl₂, (NH₄)₂SO₄, NH₄Cl, Ca(NO₃)₂*2H₂O, Mg(NO₃)₂*6H₂O, K₂HPO₄, NH₄H₂PO₄, KHSO₄, Na₂CO₃*10H₂O, ZnSO₄*7H₂O, Na(C₃H₃O₂)*3H₂O, Na₂S₂O₃, KBr, Na₂SO₃*7H₂O, KI, Nal, NaNO₂, NaF, NaHSO₄ and mixtures thereof; wherein the crosslinking or branching units result from the incorporation of a monomer according to formula (4) 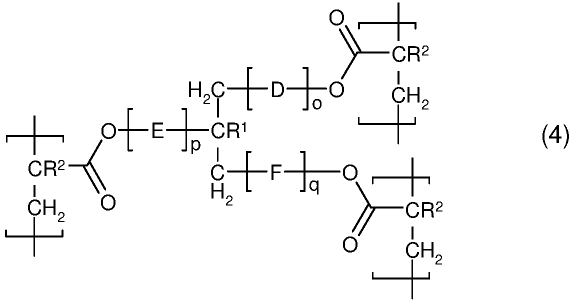 wherein
   R¹ is independently selected from H, methyl or ethyl; and
   R² is a linear or branched alkyl group having 1 to 6 carbon atoms, or is a linear or branched, mono- or polyunsaturated alkylene group having 2 to 6 carbon atoms;
   D, E, and F are independently methyleneoxy(-CH₂O), ethyleneoxy(-CH₂-CH₂-O-), propyleneoxy(-CH(CH₃)-CH₂-O-), a linear or branched alkylene group having 1 to 6 carbon atoms, a linear or branched, singularly or multiply unsaturated alkenylene group having 2 to 6 carbon atoms, a linear mono-hydroxyalkylene group having 2 to 6 carbon atoms or a linear or branched dihydroxyalkylene group having 3 to 6 carbon atoms; and
   o, p, and q each independently are an integer from 1 to 50.

### Generally preferred embodiment C

Desiccant composition comprising
(a) From 25 to 40 wt.-% of at least one polymer wherein the polymer is characterized in that its repeating structural units comprise
   (i) from 5.00 mol-% to 99.9 mol-% of repeating units according to Formula (1): 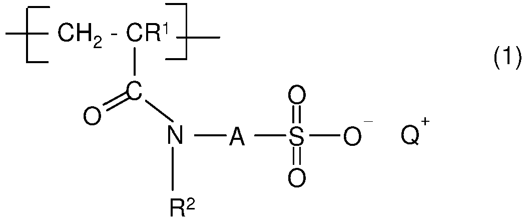 wherein:
      R¹ and R² are independently selected from H, methyl or ethyl;
      A is a linear or branched C₁-C₁₂-alkyl group; and
      Q⁺ is H⁺, NH₄⁺, organic ammonium ions [NHR⁵R⁶R⁷]⁺ wherein R⁵, R⁶, and R⁷ independently of one another may be hydrogen, a linear or branched alkyl group having 1 to 22 carbon atoms, a linear or branched, singularly or multiply unsaturated alkenyl group having 2 to 22 carbon atoms, a C₆-C₂₂ alkylamidopropyl group, a linear mono-hydroxyalkyl group having 2 to carbon atoms or a linear or branched dihydroxyalkyl group having 3 to carbon atoms, and where at least one of the radicals R⁵, R⁶, and R⁷ is not hydrogen, or Q⁺ is Li⁺, Na⁺, K⁺, ½ Ca⁺⁺, ½ Mg⁺⁺, ½ Zn⁺⁺, 1/3 Al⁺⁺⁺, or combinations thereof;
   (ii) from 0.1 mol-% to 95 mol-% of crosslinking or branching units, wherein the crosslinking or branching units result from the incorporation of a monomer comprising at least two olefinically unsaturated double bonds; and
(b) From 60 to 75 wt.-% of at least one deliquescent component selected from the group consisting of CaCl₂, MgCl₂, (NH₄)₂SO₄, NH₄Cl, Ca(NO₃)₂*2H₂O, Mg(NO₃)₂*6H₂O, K₂HPO₄, NH₄H₂PO₄, KHSO₄, Na₂CO₃*10H₂O, ZnSO₄*7H₂O, Na(C₃H₃O₂)*3H₂O, Na₂S₂O₃, KBr, Na₂SO₃*7H₂O, KI, Nal, NaNO₂, NaF, NaHSO₄ and mixtures thereof;
   wherein the crosslinking or branching units result from
   the incorporation of a monomer according to formula (4) 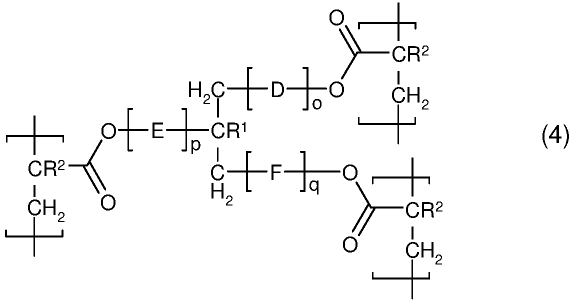
   wherein
   R¹ is independently selected from H, methyl or ethyl; and
   R² is a linear or branched alkyl group having 1 to 6 carbon atoms, or is a linear or branched, mono- or polyunsaturated alkylene group having 2 to 6 carbon atoms;
   D, E, and F are independently methyleneoxy(-CH₂O), ethyleneoxy(-CH₂-CH₂-O-), propyleneoxy(-CH(CH₃)-CH₂-O-), a linear or branched alkylene group having 1 to 6 carbon atoms, a linear or branched, singularly or multiply unsaturated alkenylene group having 2 to 6 carbon atoms, a linear mono-hydroxyalkylene group having 2 to 6 carbon atoms or a linear or branched dihydroxyalkylene group having 3 to 6 carbon atoms; and
   o, p, and q each independently are an integer from 1 to 50;
   or wherein the crosslinking or branching units result from the incorporation of a monomer according to Formula (2): 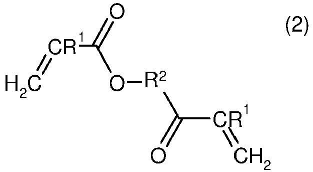 wherein
      R¹ is independently selected from H, methyl or ethyl; and
      R² is a linear or branched alkyl group having 1 to 6 carbon atoms, or is a linear or branched, mono- or polyunsaturated alkylene group having 2 to 6 carbon atoms, -(CH₂-CH₂-O)ₙ-;
      n is a real number between 1 and 100;
         and
      wherein the polymer further comprises at least one repeating neutral structural unit.

### Generally preferred embodiment D

Desiccant composition comprising
(a) From 25 to 40 wt.-% of at least one polymer wherein the polymer is
   characterized in that its repeating structural units comprise
   (i) from 5.00 mol-% to 99.9 mol-% of repeating units according to Formula (1): 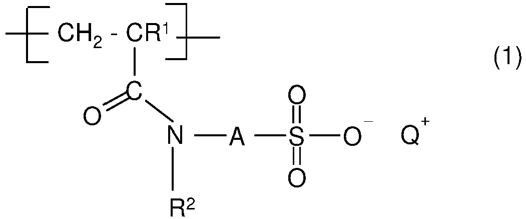 wherein:
      R¹ and R² are independently selected from H, methyl or ethyl;
      A is a linear or branched C₁-C₁₂-alkyl group; and
      Q⁺ is H⁺, NH₄⁺, organic ammonium ions [NHR⁵R⁶R⁷]⁺ wherein R⁵, R⁶, and R⁷ independently of one another may be hydrogen, a linear or branched alkyl group having 1 to 22 carbon atoms, a linear or branched, singularly or multiply unsaturated alkenyl group having 2 to 22 carbon atoms, a C₆-C₂₂ alkylamidopropyl group, a linear mono-hydroxyalkyl group having 2 to carbon atoms or a linear or branched dihydroxyalkyl group having 3 to carbon atoms, and where at least one of the radicals R⁵, R⁶, and R⁷ is not hydrogen, or Q⁺ is Li⁺, Na⁺, K⁺, ½ Ca⁺⁺, ½ Mg⁺⁺, ½ Zn⁺⁺, 1/3 Al⁺⁺⁺, or combinations thereof;
   (ii) from 0.1 mol-% to 95 mol-% of crosslinking or branching units, wherein the crosslinking or branching units result from the incorporation of a monomer comprising at least two olefinically unsaturated double bonds; and
(b) From 60 to 75 wt.-% of at least one deliquescent component selected from the group consisting of CaCl₂, MgCl₂, (NH₄)₂SO₄, NH₄Cl, Ca(NO₃)₂*2H₂O, Mg(NO₃)₂*6H₂O, K₂HPO₄, NH₄H₂PO₄, KHSO₄, Na₂CO₃*10H₂O, ZnSO₄*7H₂O, Na(C₃H₃O₂)*3H₂O, Na₂S₂O₃, KBr, Na₂SO₃*7H₂O, KI, Nal, NaNO₂, NaF, NaHSO₄ and mixtures thereof;

wherein the crosslinking or branching units result from
the incorporation of a monomer according to formula (4) 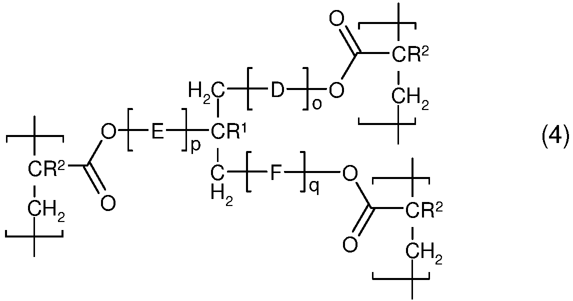
wherein
   R¹ is independently selected from H, methyl or ethyl; and
   R² is a linear or branched alkyl group having 1 to 6 carbon atoms, or is a linear or branched, mono- or polyunsaturated alkylene group having 2 to 6 carbon atoms;
   D, E, and F are independently methyleneoxy(-CH₂O), ethyleneoxy(-CH₂-CH₂-O-), propyleneoxy(-CH(CH₃)-CH₂-O-), a linear or branched alkylene group having 1 to 6 carbon atoms, a linear or branched, singularly or multiply unsaturated alkenylene group having 2 to 6 carbon atoms, a linear mono-hydroxyalkylene group having 2 to 6 carbon atoms or a linear or branched dihydroxyalkylene group having 3 to 6 carbon atoms; and
   o, p, and q each independently are an integer from 1 to 50;
   or wherein the crosslinking or branching units result from the incorporation of a monomer according to Formula (2): 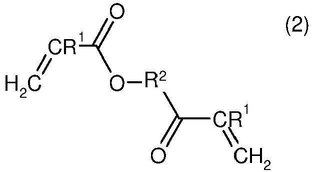 wherein
      R¹ is independently selected from H, methyl or ethyl; and
      R² is a linear or branched alkyl group having 1 to 6 carbon atoms, or is a linear or branched, mono- or polyunsaturated alkylene group having 2 to 6 carbon atoms, -(CH₂-CH₂-O)ₙ-;
      n is a real number between 1 and 100;
      wherein the polymer further comprises at least one repeating neutral structural unit;
      and wherein the polymer comprises at least one unit resulting from the incorporation of monomers according to Formula (3) 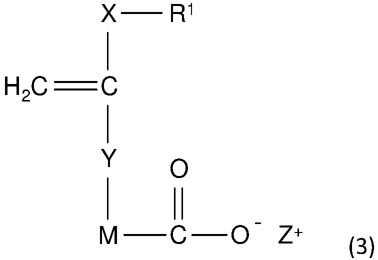 wherein
         - R1 and R3: are H, methyl or ethyl, or C(O)O-Z+;
         - X, Y: are selected from a covalent bond, O, CH2, C(O)O, OC(O), C(O)NR3 or NR3C(O);
         - M: is selected from a covalent bond, -[C(O)O-CH2-CH2]n-, a linear or branched alkylene group with 1 to 6 carbon atoms, a linear or branched, mono- or polyunsaturated alkenylene group with 2 to 6 carbon atoms, a linear mono-hydroxyalkylene group with 2 to 6 carbon atoms or a linear or branched di-hydroxyalkylene group with 3 to 6 carbon atoms;
         - n: is an integer from 1 to 5; and
         - Z+: is H+, NH4+, an organic ammonium ion [HNR5R6R7]+
         wherein R5, R6 and R7 are independently hydrogen, a linear or branched alkyl group with 1 to 22 carbon atoms, a linear or branched, mono- or polyunsaturated alkenyl group with 2 to 22 carbon atoms, a C6 to C22 alkylamidopropyl group, a linear mono-hydroxyalkyl group with 2 to 10 carbon atoms or a linear or branched di-hydroxyalkyl group with 3 to 10 carbon atoms, and wherein at least one of R5, R6 and R7 is not hydrogen, or Z+ is Li+, Na+, K+, ½ Ca++, ½ Mg++, ½ Zn++, 1/3 AI+++, or combinations thereof. In at least one embodiment, the Z+ is H+, NH4+, Li+, Na+, K+, ½ Ca++, ½ Mg++, ½ Zn++, or 1/3 Al+++, preferably H+, NH4+, Li+, Na+ or K+.

### Examples

In the following the present invention is illustrated by examples which are not limiting the scope of the invention in any way but illustrate the advantages of the inventive desiccant composition in comparison to other composition.

### List of figures

- Fig.1:: Shows the conditions of the polymer compositions at 65°C and 50% r.h. after 1 day
- Fig.2:: Shows the conditions of the polymer compositions at 65°C and 50% r.h. after 6 days
- Fig.3:: Shows the conditions of the polymer compositions at 65°C and 50% r.h. after 9 days
- Fig.4:: Shows the conditions of the polymer compositions at 65°C and 50% r.h. after 13 day
- Fig.5:: Shows the conditions of the polymer compositions at 80°C and 50% r.h. after 1 day
- Fig.6:: Shows the conditions of the polymer compositions at 80°C and 50% r.h. after 2 days
- Fig.7:: Shows the conditions of the polymer compositions at 80°C and 50% r.h. after 7 days

### General

### List of polymers tested:

| | |
|---|---|
| Polymer 1 | Polymeric sulphonic acid, partially neutralized |
| Polymer 2 | Acrylamide sodium acrylate copolymer (CAS 25085-02-3) |
| Polymer 3 | Cross-linked copolymer of potassium acrylate and acrylic acid (superabsorbent polymer) |
| Polymer 4 | 2-Propen-1-aminium, N,N-dimethyl-N-2-propenyl-, chlorid, homopolymer (PolyDADMAC, CAS 26062-79-3) |
| Polymer 5 | Methyl cellulose (CAS 9004-67-5) |
| Polymer 6 | Polyvinyl alcohol (CAS 9002-89-5) |
| Polymer 7 | Potato starch |
| Polymer 8 | Sodium Polyacryloyldimethyl Taurate |
| Polymer 9 | Sodium Acryloyldimethyl Taurate |
| Polymer 10 | Caesalpinia Spinosa Gum |

### 1. Selection of the polymer

50 g anhydrous CaCl2 were carefully dissolved in 200 ml water in small portions with gentle stirring. Solution became hot. After cooled to room temperature 5 g of the respective polymers were added to the mixture which was then stirred using an impeller mixer at 1000 rpm speed for 5 min. The mixture was allowed to settle for 1 hour before viscosity was measured and gel appearance was assessed.

| Gelling agent | Viscosity @ 10 rpm / mPa*s | Gel appearance |
|---|---|---|
| Polymer 1 | 54800 | Stable gel |
| Polymer 2 | 100 | Instable gel, sedimentation |
| Polymer 3 | Not measurable | Sedimentation |
| Polymer 4 | 20 | Homogenous liquid, no gelation |
| Polymer 5 | 44 | Separation of white foam on top of liquid |
| Polymer 6 | 228 | Homogeneous, viscous liquid |
| Polymer 7 | 35600 | Stable gel |
| Polymer 8 | 52000 | Stable gel |
| Polymer 9 | 41000 | Stable gel |
| Polymer 10 | 530 | Instable gel, sedimentation |

As only compositions with polymers 1 and 7 to 10 resulted in stable compositions, only these polymers were used during the following absorption tests.

### Example 1

### Stability of the desiccant composition at 65 °C and 50% relative humidity (r.h.)

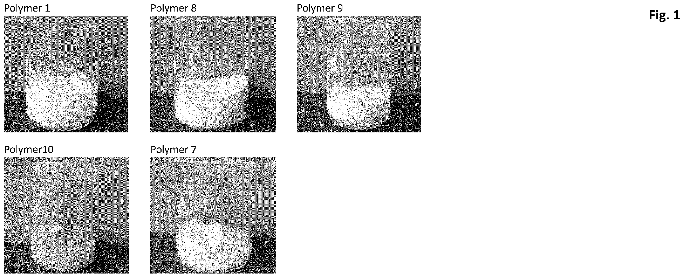

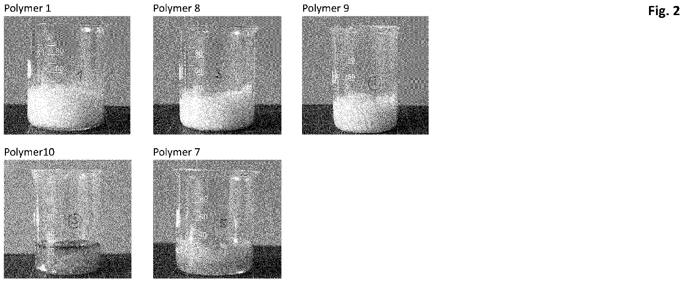

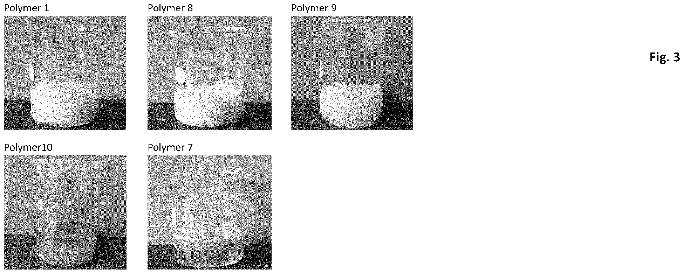

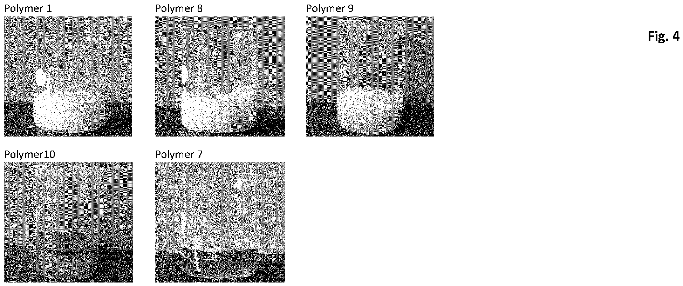

13 g of CaCl2 and 7 g of the respective gelling agent were mixed in a beaker and placed in the climate chamber at conditions of 65 °C / 50 % r. h. for a period of 13 days. Moisture uptake and gel appearance were observed. The results over a period of 13 days are shown in table 1 and figures 1 to 4:

**Table 1**

| **Conditions: 65 °C / 50 % r. h.** | | | | |
|---|---|---|---|---|
| Polymers | 1. day | 6. day | 9. day | 13. day |
| Polymer 1 | 48.1 wt% | 89.5 wt% | 92.0 wt% | 92.4 wt% |
| | wet white powder | white, stable gel | white, stable gel | white, stable gel |
| Polymer 8 | 51.7 wt% | 89.0 wt% | 90.8 wt% | 91.0 wt% |
| | wet white powder | white, stable gel | white, stable gel | white, stable gel |
| Polymer 9 | 41.7 wt% | 87.8 wt% | 89.9 wt% | 90.8 wt% |
| | wet white powder | white, stable gel | white, stable gel | white, stable gel |
| Polymer 10 | 43.4 wt% | 87.6 wt% | 89.9 wt% | 90.0 wt% |
| | wet white powder under brown liquid | wet white powder under brown liquid | brown gel | dark brown gel |
| Polymer 7 | 36.5 wt% | 86.4 wt% | 92.8 wt% | 94.3 wt% |
| | wet white powder under pale yellow liquid | Light brown gel | caramel coloured gel, becoming liquid | Brown liquid |

It can be seen from the results of example 1 that only compositions according to the invention (compositions with polymers 1, 8 or 9) resulted in desiccant compositions which were stable over a long period of time under extreme temperature and humidity conditions. Pictures of the composition are shown in figures 1, 2, 3 and 4.

### Example 2

### Stability of the desiccant composition at 80 °C and 50% relative humidity (r.h.)

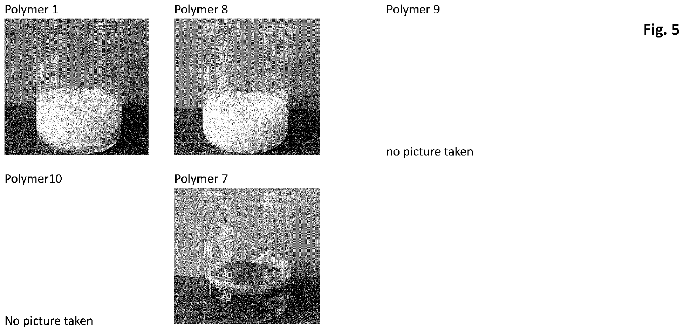

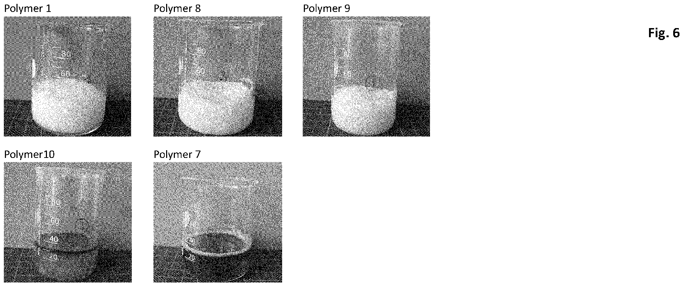

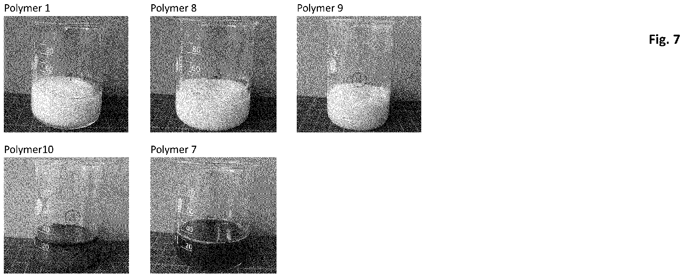

13 g of CaCl2 and 7 g of the respective gelling agent were mixed in a beaker and placed in the climate chamber at conditions of 80 °C / 50 % r. h. for a period of 7 days. Moisture uptake and gel appearance were observed. The results over a period of 7 days are shown in table 2 and figures 5 to 7:

**Table 2**

| **Conditions: 80 °C / 50 % r. h.** | | | |
|---|---|---|---|
| Gelling agent | 1. day | 2. day | 7. day |
| Polymer 1 | 90.6 wt% | 88.4 wt% | 87.3 wt% |
| | white, stable gel | white, stable gel | white, stable gel |
| Polymer 8 | 89.8 wt% | 87.9 wt% | 86.7 wt% |
| | white, stable gel | white, stable gel | white, stable gel |
| Polymer 9 | 90.4 wt% | 90.1 wt% | 89.1 wt% |
| | white, stable gel | white, stable gel | white, stable gel |
| Polymer 10 | 89.4 wt% | 89.0 wt% | 88.0 wt% |
| | brown gel | dark brown liquid | dark brown to black liquid |
| Polymer 7 | 92.0 wt% | 89.6 wt% | 88.9 wt% |
| | brown liquid | brown liquid | Dark brown to black liquid |

It can be seen from the results of example 2 that only compositions according to the invention (compositions with polymers 1, 8 or 9) resulted in desiccant compositions which were stable over a long period of time under extreme temperature and humidity conditions. Pictures of the composition are shown in figures 5, 6 and 7.

## Claims

1. Desiccant composition comprising
(a) From 20 to 65 wt.-% of at least one polymer wherein the polymer is
**characterized in that** its repeating structural units comprise
(i) from 5.00 mol-% to 99.9 mol-% of repeating units according to Formula (1): 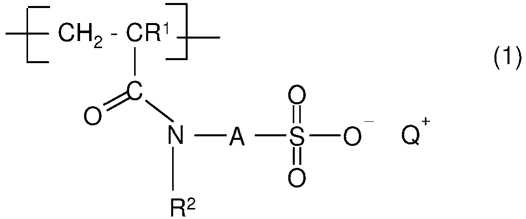 wherein:
R¹ and R² are independently selected from H, methyl or ethyl;
A is a linear or branched C₁-C₁₂-alkyl group; and
Q⁺ is H⁺, NH₄⁺, organic ammonium ions [NHR⁵R⁶R⁷]⁺ wherein R⁵, R⁶, and R⁷ independently of one another may be hydrogen, a linear or branched alkyl group having 1 to 22 carbon atoms, a linear or branched, singularly or multiply unsaturated alkenyl group having 2 to 22 carbon atoms, a C₆-C₂₂ alkylamidopropyl group, a linear mono-hydroxyalkyl group having 2 to carbon atoms or a linear or branched dihydroxyalkyl group having 3 to carbon atoms, and where at least one of the radicals R⁵, R⁶, and R⁷ is not hydrogen, or Q⁺ is Li⁺, Na⁺, K⁺, ½ Ca⁺⁺, ½ Mg⁺⁺, ½ Zn⁺⁺, 1/3 Al⁺⁺⁺, or combinations thereof;
(ii) from 0.1 mol-% to 95 mol-% of crosslinking or branching units, wherein the crosslinking or branching units result from the incorporation of a monomer comprising at least two olefinically unsaturated double bonds; and
(b) From 35 to 80 wt.-% of at least one deliquescent component, at least one desiccant clay, at least one silica gel, at least one molecular sieve at least one calcium sulfate or mixtures thereof.

2. Desiccant composition according to claim 1 wherein the crosslinking or branching units result from the incorporation of a monomer according to formula (2) 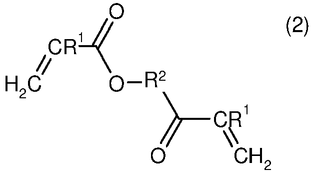 wherein
R¹ is independently selected from H, methyl or ethyl; and
R² is a linear or branched alkyl group having 1 to 6 carbon atoms, or is a linear or branched, mono- or polyunsaturated alkylene group having 2 to 6 carbon atoms, -(CH₂-CH₂-O)ₙ-;
n is a real number between 1 and 100.

3. Desiccant composition according to claim 1 wherein the crosslinking or branching units (ii) result from the incorporation of a monomer according to Formula (4) 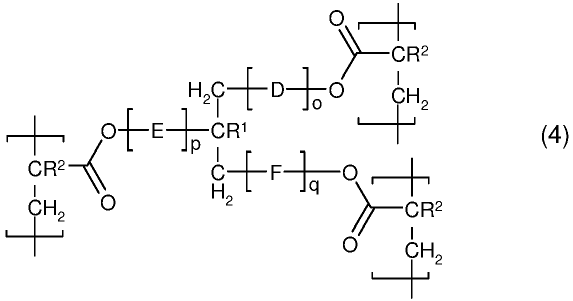 wherein
R¹ is independently selected from H, methyl or ethyl; and
R² is a linear or branched alkyl group having 1 to 6 carbon atoms, or is a linear or branched, mono- or polyunsaturated alkylene group having 2 to 6 carbon atoms;
D, E, and F are independently methyleneoxy(-CH₂O), ethyleneoxy(-CH₂-CH₂-O-), propyleneoxy(-CH(CH₃)-CH₂-O-), a linear or branched alkylene group having 1 to 6 carbon atoms, a linear or branched, singularly or multiply unsaturated alkenylene group having 2 to 6 carbon atoms, a linear mono-hydroxyalkylene group having 2 to 6 carbon atoms or a linear or branched dihydroxyalkylene group having 3 to 6 carbon atoms; and
o, p, and q each independently are an integer from 1 to 50.

4. Desiccant composition according to any of the foregoing claims wherein the at least one cross-linked polymer further comprises
(iii) from 0.99 mol-% to 59.99 mol- % of repeating neutral structural units, wherein at least 10 wt.-% of the neutral structural units.

5. Desiccant composition according to any of the foregoing claims wherein the at least one cross-linked polymer further comprises
(iv) from 1.98 mol-% to 20 mol-% of anionic structural units, wherein the repeating anionic structural units result from the incorporation of a monomer comprising at least one carboxylate anion, and wherein the repeating anionic structural units are different from (i).

6. Desiccant composition according to claim 5, wherein the repeating anionic structural unit (iv) results from the incorporation of monomers according to formula (3) 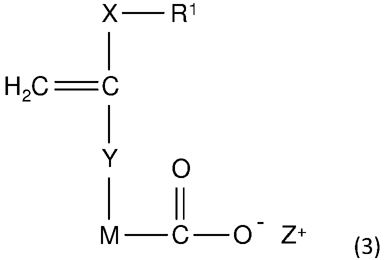 wherein
R1 and R3 are H, methyl or ethyl, or C(O)O-Z+;
X, Y are selected from a covalent bond, O, CH2, C(O)O, OC(O), C(O)NR3 or NR3C(O);
M is selected from a covalent bond, -[C(O)O-CH2-CH2]n-, a linear or branched alkylene group with 1 to 6 carbon atoms, a linear or branched, mono- or polyunsaturated alkenylene group with 2 to 6 carbon atoms, a linear mono-hydroxyalkylene group with 2 to 6 carbon atoms or a linear or branched di-hydroxyalkylene group with 3 to 6 carbon atoms;
n is an integer from 1 to 5; and
Z+ is H+, NH4+, an organic ammonium ion [HNR5R6R7]+
wherein R5, R6 and R7 are independently hydrogen, a linear or branched alkyl group with 1 to 22 carbon atoms, a linear or branched, mono- or polyunsaturated alkenyl group with 2 to 22 carbon atoms, a C6 to C22 alkylamidopropyl group, a linear mono-hydroxyalkyl group with 2 to 10 carbon atoms or a linear or branched di-hydroxyalkyl group with 3 to 10 carbon atoms, and wherein at least one of R5, R6 and R7 is not hydrogen, or Z+ is Li+, Na+, K+, ½ Ca++, ½ Mg++, ½ Zn++, 1/3 AI+++, or combinations thereof. In at least one embodiment, the Z+ is H+, NH4+, Li+, Na+, K+, ½ Ca++, ½ Mg++, ½ Zn++, or 1/3 Al+++, preferably H+, NH4+, Li+, Na+ or K+.

7. Desiccant composition according to any of the foregoing claims further comprising
(c) From 1 to 25 wt.-% of at least one filler selected from the group consisting of calcium carbonate, cellulose or cellulose derivatives, anhydrous calcium sulphate, calcium oxide, silica gel, bentonite clays, zeolites, and mixtures thereof.

8. Desiccant composition according to any of the foregoing claims, wherein the at least one deliquescent component is selected from the group consisting of CaClz, MgCl₂, (NH₄)₂SO₄, NH₄Cl, Ca(NO₃)₂*2H₂O, Mg(NO₃)₂*6H₂O, K₂HPO₄, NH₄H₂PO₄, KHSO₄, Na₂CO₃*10H₂O, ZnSO₄*7H₂O, Na(C₃H₃O₂)*3H₂O, Na₂S₂O₃, KBr, Na₂SO₃*7H₂O, KI, Nal, NaNO₂, NaF, NaHSO₄ and mixtures thereof.

9. Desiccant composition according to any of the foregoing claims comprising
(a) from 25 to 40 wt.-% of at least one polymer wherein the polymer is
**characterized in that** its repeating structural units comprise
(i) from 5.00 mol-% to 99.9 mol-% of repeating units according to Formula (1): 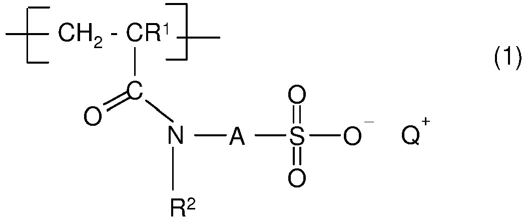 wherein:
R¹ and R² are independently selected from H, methyl or ethyl;
A is a linear or branched C₁-C₁₂-alkyl group; and
Q⁺ is H⁺, NH₄⁺, organic ammonium ions [NHR⁵R⁶R⁷]⁺ wherein R⁵, R⁶, and R⁷ independently of one another may be hydrogen, a linear or branched alkyl group having 1 to 22 carbon atoms, a linear or branched, singularly or multiply unsaturated alkenyl group having 2 to 22 carbon atoms, a C₆-C₂₂ alkylamidopropyl group, a linear mono-hydroxyalkyl group having 2 to carbon atoms or a linear or branched dihydroxyalkyl group having 3 to carbon atoms, and where at least one of the radicals R⁵, R⁶, and R⁷ is not hydrogen, or Q⁺ is Li⁺, Na⁺, K⁺, ½ Ca⁺⁺, ½ Mg⁺⁺, ½ Zn⁺⁺, 1/3 Al⁺⁺⁺, or combinations thereof;
(ii) from 0.1 mol-% to 5 mol-% of crosslinking or branching units, wherein the crosslinking or branching units result from the incorporation of a monomer comprising at least two olefinically unsaturated double bonds; and
(b) From 60 to 75 wt.-% of at least one deliquescent component, at least one desiccant clay, at least one silica gel, at least one molecular sieve at least one calcium sulfate or mixtures thereof.

10. Use of the desiccant composition as defined in any of claims 1 to 9 for the manufacture of a moisture absorbing product.

11. Use of the desiccant composition as defined in any of claims 1 to 9 or the moisture absorbing product as defined in claim 10 to absorb moisture at conditions of from 50 to 90%rel. humidity.
